# EUROPÄISCHE PATENTSCHRIFT

(11) **EP 2 996 174 B1**
(45) Veröffentlichungstag und Bekanntmachung des Hinweises auf die Patenterteilung: **11.10.2017**
(21) Anmeldenummer: 15179654.7
(22) Anmeldetag: 04.08.2015
(51) Int. Cl.: H02J 7/00, H01M 2/10, H01M 10/46

(54) **AKKUPACK FÜR EINE HANDWERKZEUGMASCHINE**
BATTERY PACK FOR ELECTRIC APPLIANCE
BOITIER DE CHARGEUR D'ACCUMULATEURS POUR APPAREIL ELECTRIQUE

(30) Priorität: 09.09.2014 DE 102014217987
(43) Veröffentlichungstag der Anmeldung: 16.03.2016
(73) Patentinhaber: ROBERT BOSCH GMBH, 70442 Stuttgart (DE)
(72) Erfinder: Schmehl, Florian, 73760 Ostfildern (DE); Baumgartner, Josef, 72218 Wildberg (DE)

(56) Entgegenhaltungen:
- EP-A1- 1 030 385
- EP-A2- 2 511 971
- WO-A1-2007/115846

## Beschreibung

Die vorliegende Erfindung betrifft einen Akkupack für eine Handwerkzeugmaschine nach Anspruch 1.

Grundsätzlich betrifft die Erfindung einen Akkupack für eine batteriebetriebene Handwerkzeugmaschine mit Kontaktelementen, welche zum Betreiben der Handwerkzeugmaschine in einer Betriebsposition des Akkupacks an der Handwerkzeugmaschine mit Gegenkontaktelementen der Handwerkzeugmaschine in Kontakt bringbar sind, und welche zum Aufladen des aus seiner Betriebsposition an der Handwerkzeugmaschine gelösten Akkupacks in einer Ladeposition des Akkupacks an einem Akkuladegerät mit Gegenkontaktelementen in Kontakt bringbar sind.

Da batteriebetriebene Handwerkzeugmaschinen eine hohe Flexibilität beim Arbeiten ermöglichen, insbesondere unabhängig vom Netzstrom sind und somit auch Außenarbeiten bequem durchgeführt werden können, ist bei einem Betrieb einer Handwerkzeugmaschine vielfach vorgesehen, Akkupacks einzusetzen.

Derartige Akkupacks sind grundsätzlich bekannt und weisen wiederaufladbare Akkumulatoren, in der Regel eine Mehrzahl von in Parallel- und/oder Reihenschaltung verbundener Akkuzellen auf. Im Zuge dieser Anmeldung ist unter einem Akkupack somit ein vorzugsweise aus mehreren elektrisch zusammengeschalteten Akkuzellen bestehendes Akkumulatorenpaket zu verstehen, das elektrische Energie speichern kann, die für den Betrieb der Handwerkzeugmaschine benötigte Energie liefert, und austauschbar an einer Handwerkzeugmaschine anbringbar ist.

In der Regel werden bei der Kontaktierung des Akkupacks mit der Handwerkzeugmaschine über in einer Schnittstelle zusammengefasste Kontaktelemente zusätzlich zu der elektrischen Spannung auch ein Temperatursignal und Kodierwiderstandswerte übertragen. Eine deratige Akkupack-Schnittstelle ist beispielsweise aus der EP 2 378 624 A2 bekannt.

Insbesondere soll unter einer Schnittstelle eine Vorrichtung verstanden werden, die dazu vorgesehen ist, eine elektrische und insbesondere eine mechanische Verbindung mit einem Ladegerät und/oder einer Handwerkzeugmaschine direkt oder indirekt herzustellen.

Das Temperatursignal dient der Überwachung der Akkupack-Zellentemperatur während des Lade- und Entladevorganges. Mit Hilfe der Kodierung kann sich der Akkupack gegenüber dem Ladegerät und der Entladeseite, also der Handwerkzeugmaschine, identifizieren, da die Akkupacks meist speziell für eine bestimmte Handwerkzeugmaschine ausgelegt sind. Andere, nicht für die Handwerkzeugmaschine vorgesehene Akkupacks, z. B. solche mit einer anderen Nennspannung, dürfen seitens der Handwerkzeugmaschine nicht akzeptiert werden, damit der Akkupack und/oder die Handwerkzeugmaschine keinen Schaden nehmen.

Das Ankoppeln des Akkupacks an die Handwerkzeugmaschine erfolgt durch Einstecken beziehungsweise Einschieben der Schnittstelle des Akkupacks in eine komplementäre Einsteckbuchse des Gerätegehäuses. Die Schnittstelle weist Kontaktschlitze auf, in denen Kontaktelemente angeordnet werden können. Ist die Energie des Akkupacks verbraucht, so kann er entnommen und mit einer Ladestation mit entsprechenden Gegenkontaktelementen verbunden werden. Stehen mehrere Akkupacks zur Verfügung, so ist es möglich, den entladenen Akkupack aus der Handwerkzeugmaschine zu entnehmen und gegen einen geladenen auszutauschen.

Sowohl die Akkupacks als auch die Handwerkzeugmaschinen und Ladegeräte und damit die jeweiligen Schnittstellen unterliegen einer steten Weiterentwicklung, wobei es üblich ist, dass zusätzliche Kontaktelemente und Gegenkontaktelemente in den Schnittstellen implementiert werden sollen, um zusätzliche Informationen zwischen den Geräten auszutauschen. Dabei ist es erstrebenswert, aus Gründen der Handlichkeit und Handhabbarkeit sowohl des Akkupacks als auch der Handwerkzeugmaschine, den für die Schnittstelle benötigten Bauraum so kompakt wie möglich zu halten. Darüber hinaus ergibt sich aus Gründen der Kompatibilität zu Vorgängermodellen gegebenenfalls die Forderung, die Geometrie der Schnittstelle gegenüber einem Vorgängermodell so wenig wie möglich zu ändern.

### Offenbarung der Erfindung

Aufgabe der Erfindung ist es, die oben genannten Nachteile zu verbessern und einen Akkupack für eine Handwerkzeugmaschine bereitzustellen, dessen Schnittstellengeometrie so ausgelegt ist, dass eine Vielzahl von Kontaktelementen bei kompakter Größe der Schnittstelle untergebracht werden können, und die dabei insbesondere bei vergrößerter Anzahl von Kontaktelementen kompatibel zu alten Schnittstelle ist.

Diese Aufgabe wird durch einen Akkupack gemäß Anspruch 1 gelöst. Vorteilhafte Ausgestaltungen, Varianten und Weiterbildungen der Erfindung sind den Unteransprüchen zu entnehmen.

Es ist vorgesehen, dass ein Akkupack für eine Handwerkzeugmaschine eine Schnittstelle zum Herstellen einer mechanischen und elektrischen Verbindung des Akkupacks mit einer Handwerkzeugmaschine und/oder einem Ladegerät aufweist. Die Schnittstelle weist Führungsmittel zum Ansetzen des Akkupacks an die Handwerkzeugmaschine und/oder das Ladegerät entlang einer Kontaktierungsrichtung sowie zumindest vier orthogonal zur Kontaktierungsrichtung angeordnete Kontaktelemente zur elektrischen und/oder mechanischen Kontaktierung korrespondierender Gegenkontaktelemente an der Handwerkzeugmaschine und/oder korrespondierender Gegenkontaktelemente an dem Ladegerät auf. Die Kontaktelemente sind als Kontakttulpen mit jeweils einem Kontaktspalt ausgestaltet. wobei mindestens zwei Kontaktelemente in Richtung der Kontaktierungsrichtung versetzt zueinander angeordnet sind. Erfindungsgemäß ist vorgesehen, dass die mindestens zwei Kontaktelemente jeweils eine unterschiedliche Höhe aufweisen und dass zumindest ein in Kontaktierungsrichtung weiter vorne liegendes, erstes Kontaktelement der zumindest zwei Kontaktelemente eine Aussparung unterhalb des Kontaktspalts aufweist. Auf diese Weise kann ein Akkupack mit einer kompakten Schnittstellengeometrie bereitgestellt werden, in welcher eine Mehrzahl von Kontaktelementen untergebracht ist, und welche die Kompatibilität zwischen der Schnittstelle von alten Akkupacks bzw. der Schnittstelle von neuen Akkupacks mit der Handwerkzeugmaschine und/oder dem Ladegerät gewährleistet.

In einer besonders vorteilhaften Ausgestaltung ist durch die Aussparung des ersten Kontaktelements hindurch das zumindest zweite Kontaktelement durch ein Gegenkontaktelement an der Handwerkzeugmaschine und/oder ein Gegenkontaktelement am Ladegerät kontaktierbar.

Bevorzugterweise verläuft eine Ebene, die durch den Kontaktspalt des ersten Kontaktelementes und die Kontaktierungsrichtung aufgespannt wird, auch durch den Kontaktspalt des zweiten Kontaktelementes. Hierbei ist es besonders vorteilhaft, dass eine Projektion des Kontaktspalts des zumindest einen zweiten Kontaktelementes in Kontaktierungsrichtung im Bereich der Aussparung des zumindest einen ersten Kontaktelementes liegt.

Vorteilhafterweise liegt das zumindest eine erste Kontaktelement in einer ersten Kontaktierungsebene b und das zumindest eine zweite Kontaktelement in einer zweiten Kontaktierungsebene c.

in einer bevorzugten Ausführungsform umfasst die Schnittstelle des Akkupack fünf Kontaktelemente, wobei auf einer ersten Kontaktierungsebene b, c ein Plus-Kontaktelement, ein Minus-Kontaktelement, ein Temperatur-Kontaktelement sowie ein erstes Kontaktelement und auf einer zweiten Kontaktierungsebene c, b ein zweites Kontaktelement angeordnet ist. Vorzugsweise ist vorgesehen, dass ein weiteres Kontaktelement auf einer zweiten Kontaktierungsebene c, b angeordnet ist. Auf diese Weise können in der Schnittstelle des Akkupacks eine Mehrzahl von Kontaktelementen untergebracht werden, wobei die versetzte Anordnung eine kompakte Bauform der Schnittstelle ermöglicht. Grundsätzlich ist es besonders vorteilhaft, wenn wenigstens eines der Kontaktelemente ein Datenkontaktelement ist.

Durch die vorliegende Erfindung wird gewährleistet, dass eine Kodierung für die Handwerkzeugmaschine bei einem in ein Handwerkzeug eingeschobenen erfindungsgemäßen Akkupack durch die entsprechende Form und Anordnung der Kontaktelemente übertragen wird, wohingegen die Gegenkontaktelemente des Handwerkzeuges nicht in Kontakt treten können mit dem in der Schnittstelle des Akkupacks angeordneten Kontaktelement für die Kontaktierung des Ladegerätes, Ferner können bereits existierende Akkupacks mit neuen Ladegeräten geladen werden, da die neuen Ladegeräte durch die Anordnung der Gegenkontaktelemente in der Lage sind bei den bereits existierenden Akkupacks die Kodierung durch Kontaktierung der Kontaktelemente des Akkupacks zu identifizieren.

Der erfindungsgemäße Akkupack kann in einer Handwerkzeugmaschine vorgesehen sein. Dementsprechend bildet auch eine Handwerkzeugmaschine, welche zumindest einen erfindungsgemäßen Akkupack umfasst sowie eine Schnittstelle mit Gegenkontaktelementen zur elektrischen und/oder mechanischen Kontaktierung der Kontaktelemente des Akkupacks, einen weiteren Gegenstand der Erfindung. Hierbei weisen mindestens zwei Gegenkontaktelemente der Handwerkzeugmaschine derart unterschiedliche Längen L und/oder Höhen H auf, dass sie dazu geeignet sind, mindestens eines der zwei in Richtung der Kontaktierungsrichtung y versetzt zueinander angeordneten Kontaktelemente des Akkupacks zu kontaktieren. Beim Anbringen des Akkupacks an einer Handwerkzeugmaschine werden Aufnahmemittel, z. B. Führungsnuten und Führungsrippen, zur Aufnahme der korrespondierenden Führungselemente des Akkupacks der Handwerkzeugmaschine mit diesen in Eingriff gebracht, wobei der Akkupack in einer Kontaktierungsrichtung y entlang der Aufnahmemittel des Handgriffs eingeführt wird, und wobei der Akkupack entlang einer unteren, im Wesentlichen senkrecht zur Längsrichtung des Handgriffs ausgerichteten Außenfläche des Handgriffs in die Akkupackaufnahme einer Handwerkzeugmaschine geschoben wird.

Der erfindungsgemäße Akkupack kann auch zusammen mit einem Ladegerät verwendet werden. Dementsprechend bildet auch ein Ladegerät zur Aufladung eines erfindungsgemäßen Akkupacks einen weiteren Gegenstand der Erfindung. Hierbei weist das Ladegerät eine Schnittstelle mit Gegenkontaktelementen zur elektrischen und/oder mechanischen Kontaktierung der Kontaktelemente des Akkupacks auf, wobei mindestens zwei Gegenkontaktelemente derart unterschiedliche Längen L und/oder Höhen H aufweisen, dass sie dazu geeignet sind, mindestens eines der zwei in Richtung der Kontaktierungsrichtung y versetzt zueinander angeordneten Kontaktelemente des Akkupacks zu kontaktieren.

Generell werden unter einer Handwerkzeugmaschine sämtliche Handwerkzeugmaschinen mit einem in Rotation oder Translation versetzbaren Werkzeugträger, der direkt, über eine Getriebe oder über ein Planetengetriebe von einem Antriebsmotor antreibbar ist wie beispielsweise Stabschrauber, Akku-Bohrer, Schlagbohrmaschinen, Multifunktionswerkzeuge, Sägen, Schleifer, Scheren und/ oder Bohrschrauber verstanden. Unter Übertragung elektrischer Energie soll in diesem Zusammenhang insbesondere verstanden werden, dass die Handwerkzeugmaschine über einen Akkupack an den Korpus Energie weiterleitet.

Weitere Merkmale, Anwendungsmöglichkeiten, Vorteile und Ausgestaltungen der Erfindung ergeben sich aus der nachfolgenden Beschreibung der Ausführungsbeispiele der Erfindung, welche in den Figuren dargestellt sind. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand von bevorzugten Ausführungsbeispielen näher erläutert. Die Zeichnungen sind schematisch und zeigen:
- Fig. 1: eine perspektivische Ansicht eines erfindungsgemäßen Akkupacks;
- Fig. 2: eine Schnittansicht des Akkupacks aus Figur 1 während einer Kopplung mit einer Handwerkzeugmaschine;
- Fig. 3: eine perspektivische Detailansicht von Kontaktelementen der Schnittstelle des Akkupacks aus Figur 1 und 2;
- Fig. 4: eine perspektivische Ansicht einer erfindungsgemäßem Handwerkzeugmaschine ohne Akkupack; und
- Fig. 5: eine perspektivische Ansicht eines erfindungsgemäßen Ladegerätes.

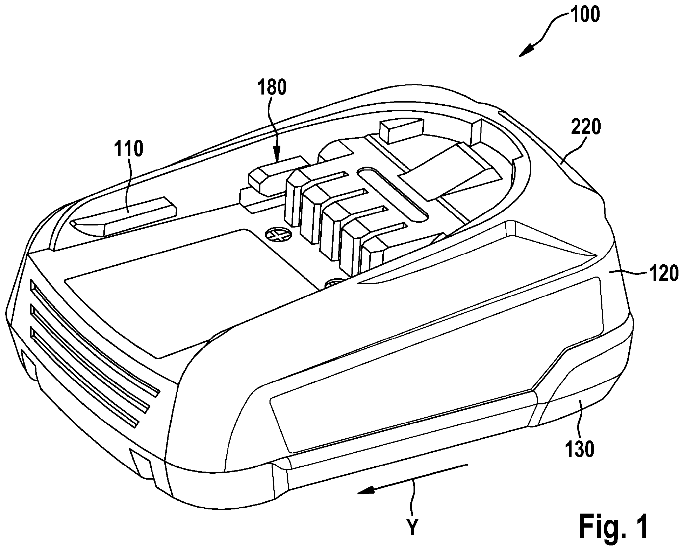

Die Figur 1 zeigt einen Akkupack 100. Der Akkupack 100 umfasst ein Gehäuse aus einer ersten Gehäusekomponente 120 und einer zweiten Gehäusekomponente 130, wobei das Gehäuse zwischen der ersten Gehäusekomponente 120 und der zweiten Gehäusekomponente 130 eine Mehrzahl parallel oder in Serie verschaltete Akkuzellen 400 aufnimmt. Die Akkuzellen 400 werden entweder, wie dargestellt, mittels eines Zellträgers 410 oder mittels Papphülsen zur Isolation der Akkuzellen 400 zueinander zwischen den beiden Gehäusekomponenten 120, 130 positioniert. Der Akkupack 100 ist in der dargestellten Ausführungsvariante als Schiebeakkupack ausgebildet. Beim Anbringen des Akkupacks 100 an einer Handwerkzeugmaschine 300 oder an einem Ladegerät 700 werden Aufnahmemittel 310, 710, z. B. Führungsnuten und Führungsrippen, der Handwerkzeugmaschine 300 oder des Ladegerätes 700 zur Aufnahme der korrespondierenden Führungselemente 110 des Akkupacks 100 mit diesen in Eingriff gebracht, wobei der Akkupack 100 in einer Kontaktierungsrichtung y entlang der Aufnahmemittel 310, 710 eingeführt und eine Schnittstelle 180 des Akkupacks 100 in eine korrespondierende Schnittstelle 380 der Handwerkzeugmaschine 300 oder eine korrespondierende Schnittstelle 780 des Ladegerätes 700 geschoben. Über die Schnittstellen 180, 380, 780 kann der Akkupack 100 der Handwerkzeugmaschine 300 und/oder dem Ladegerät 700 zugeordnet werden.

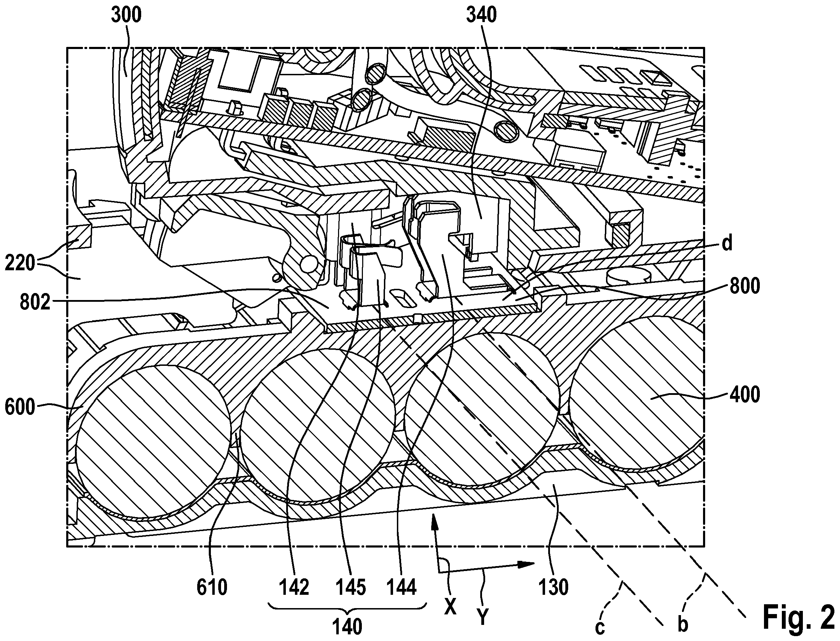

Wie in Figur 2 zu erkennen ist, nimmt das Akkupackgehäuse zwischen der ersten Gehäusekomponente 120 und der zweiten Gehäusekomponente 130 einen Zellenträger 500 mit einer Mehrzahl in einer Reihenschaltung verschalteter Akkuzellen 400 auf. Ferner ist zu erkennen ist, dass die einzelnen Akkuzellen 400 zur mechanischen Fixierung in einem Zellenhalter 600 beabstandet voneinander aufgenommen sind. Der Zellenhalter 600 dient neben der Fixierung der Akkuzellen 400 in dem Akkupackgehäuse 120, 130 auch der Kühlung der Akkuzellen 400 und besteht aus einem wärmeleitfähigen Material, beispielsweise Aluminium oder einem Kunststoff. Desweiteren weist der Zellenhalter 600 Rippen 610 auf, so dass die einzelnen Akkuzellen 400 separiert werden und eine elektrische Isolierung der einzelnen Akkuzellen 400 voneinander gewährleistet werden kann. Der Wärmübergangswiderstand zwischen den benachbarten Akkuzellen 400 sowie zwischen den Akkuzellen 400 und dem Zellenhalter 600 ist dabei möglichst gering, so dass die von den Akkuzellen 400 erzeugte Verlustwärme gut nach außen abgeführt und eine Überhitzung des Akkupacks im Inneren verhindert werden kann. An der Oberfläche des Zellenhalters 600 ist innerhalb des Akkupackgehäuses 120, 130 eine Akkupackelektronik 800 befestigt. Auf der Akkupackelektronik 800 sind Kontaktelemente 140 zur Herstellung der elektrischen und mechanischen Verbindung zwischen dem Akkupack 100 und der Handwerkzeugmaschine 300 bzw. zwischen dem Akkupack 100 und dem Ladegerät 700 befestigt. Die Verbindung zwischen der Akkupackelektronik 800 und dem Zellenhalter 600 wird durch Befestigungselemente gewährleistet.

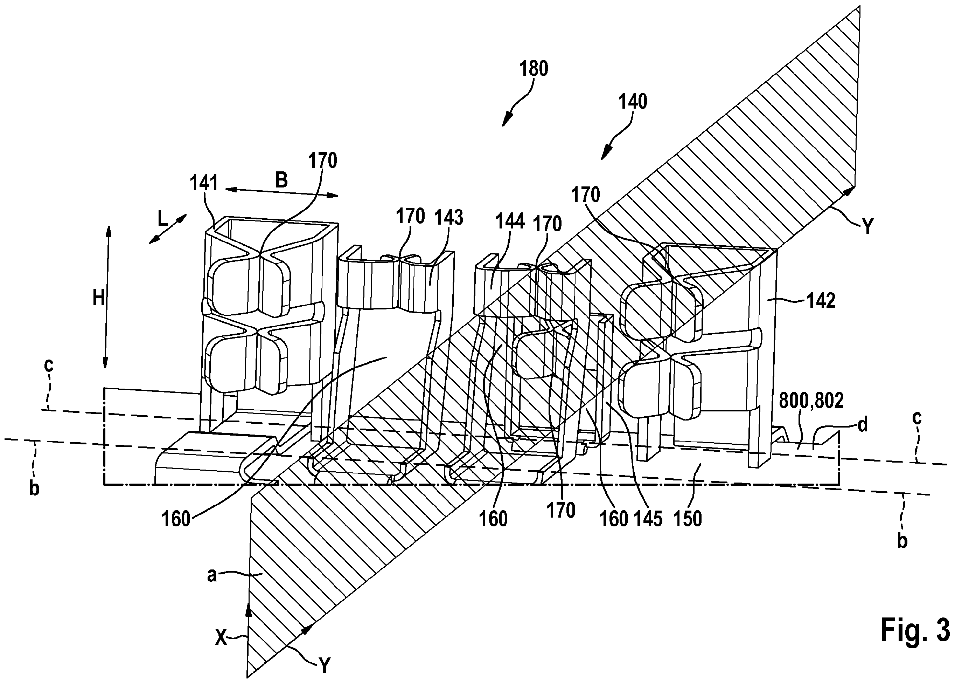

Ferner ist in Figur 3 im Detail zu erkennen, dass die Schnittstelle 180 des Akkupacks 100 fünf Kontaktelemente 140 umfasst, wobei die fünf Kontaktelemente 140 auf der Akkupackelektronik 800 befestigt sind, wobei zwei Kontaktelemente, ein Plus-Kontaktelement 141 und ein Minus-Kontaktelement 142 für die Spannungsversorgung vorhanden sind, und wobei die weiteren Kontaktelemente 143, 144, 145 Kodierungs-Kontaktelemente und Temperatur-Kontaktelemente sind.

Die zwei versetzt zueinander angeordneten Kontaktelemente 144, 145 sind als Paar derart versetzt zueinander, so dass ein in Kontaktierungsrichtung y weiter vorne liegendes erstes Kontaktelement 144 und ein in Kontaktierungsrichtung y weiter hinten liegendes zweites Kontaktelement 145 vorliegt. In der dargestellten Ausführungsform weist sowohl das erste Kontaktelement 144 als auch das zweite Kontaktelemente 145 des Paares eine Aussparung 160 auf. Durch die Aussparung 160 des vorderen ersten Kontaktelementes 144 hindurch ist das zweite Kontaktelement 145 durch ein Gegenkontaktelement 340 an der Handwerkzeugmaschine 300 und/oder ein Gegenkontaktelement 740 am Ladegerät 700 kontaktierbar.

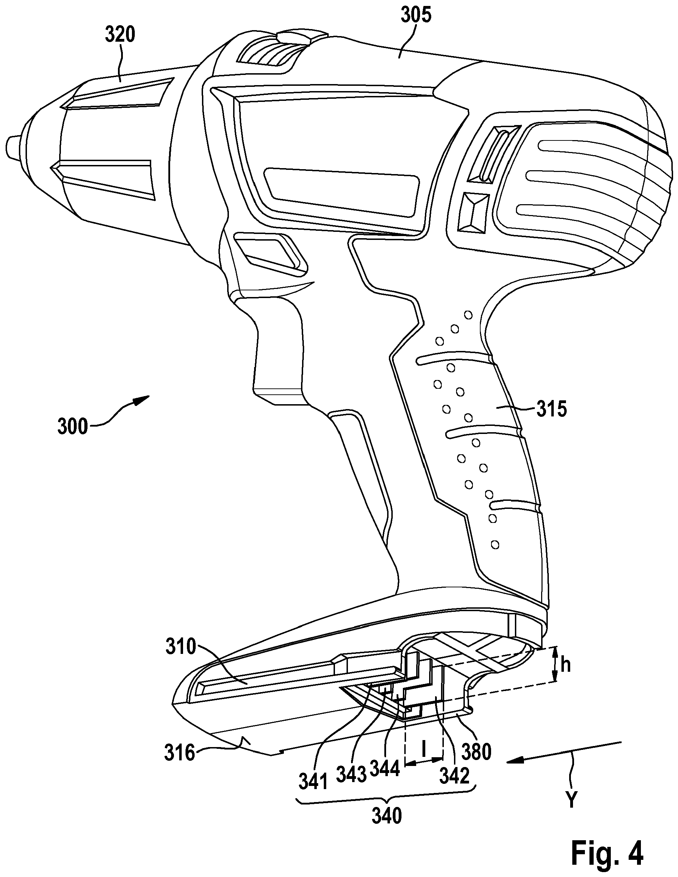

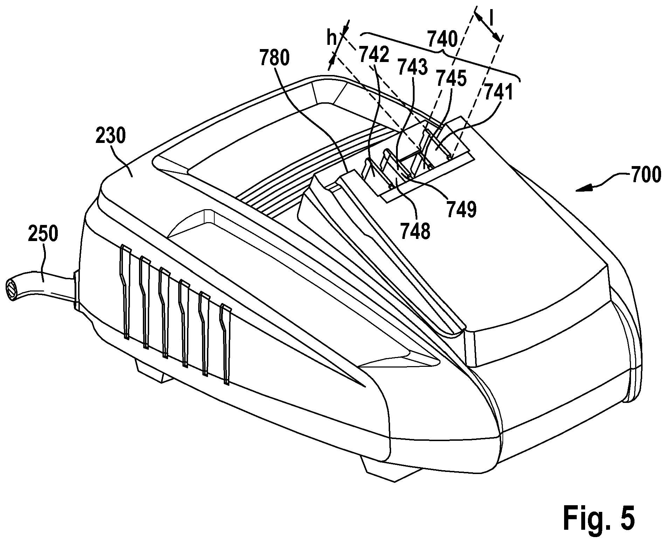

Wie in den Figuren 4 und 5 dargestellt, wirken die Kontaktelemente 140 beim Anbringen des Akkupacks 100 an eine Handwerkzeugmaschine 300 oder an ein Ladegerät 700 mit den korrespondierenden Gegenkontaktelementen 740, 340 zusammen, so dass grundsätzlich nur bei vorhanden sein zueinander korrespondierender Kontaktelemente 140 und Gegenkontaktelemente 340, 740 der Akkupack 100 an der Handwerkzeugmaschine 300 oder dem Ladegerät 700 anbringbar bzw. verwendbar ist.

Ferner ist in der in Figur 3 dargestellten Variante der Schnittstelle 180 auf einer ersten Kontaktierungsebene b das Plus-Kontaktelement 141, das Minus-Kontaktelement 142, das Temperatur-Kontaktelement 143 sowie ein erstes Kodierungs-Kontaktelement 144 angeordnet, und auf einer zweiten Kontaktierungsebene c ein zweites Kodierungs-Kontaktelement 145. Es ist auch die Anordnung eines zusätzlichen Kontaktelementes in der zweiten Kontaktierungsebene c grundsätzlich möglich. Die beiden Kontaktierungsebenen b, c sind zueinander parallel, aber in Kontaktierungsrichtung y versetzten zueinander angeordnet. Auf diese Weise kann die Schnittstelle 180 des Akkupacks 100 bei einer unveränderten Schnittstellengeometrie eine Mehrzahl von Kontaktelementen 140 aufnehmen und dabei die Forderung nach einer platzsparenden kompakten Gestaltung erfüllen.

Die in den Figuren 2 und 3 dargestellten Kontaktelemente 140 sind als Kontakttulpen ausgestaltet und weisen jeweils einen Kontaktspalt 170 zur Kontaktierung der Gegenkontaktelemente 340, 740 auf. Hierbei wir eine Ebene a durch den Kontaktspalt 170 des ersten Kontaktelementes 144 und die Kontaktierungsrichtung y aufgespannt, die auch durch den Kontaktspalt 170 des zweiten Kontaktierungselementes 145 verläuft. Eine Projektion des Kontaktspalts 170 des zumindest einen zweiten Kontaktelementes 145 entlang der Kontaktierungsrichtung y auf das zumindest eine erste Kontaktelement 144 liegt im Bereich der Aussparung 160 des zumindest einen ersten Kontaktelementes 144. Ferner sind die Kontaktelemente 140 derart aufgebaut, dass sie eine Länge L, Höhe H sowie eine Breite B aufweisen, wobei in Figur 3 deutlich zu erkennen ist, dass sich die dargestellten Kontaktelemente 140 insbesondere in ihrer jeweiligen Höhe H und Länge L unterscheiden. Entsprechend sind die Gegenkontaktelemente 340, 740, wie in den Figuren 4 und 5 zu erkennen ist, derart ausgeführt, dass diese in dem Kontaktspalt 170 des jeweils komplementären Kontaktelementes 140 des Akkupacks 100 einklemmbar sind.

Alle Kontaktelemente 143, 144, 145, die zwischen den beiden Spannungs-Kontaktelementen 141, 142 angeordnet sind weisen eine geringere Länge L als die beiden Spannungs-Kontaktelementen 141, 142 auf. Ferner haben sie unterschiedliche Höhen H sowie jeweils ein Aussparung 160 unterhalb des Kontaktspaltes 170. Durch eine derartige Ausgestaltung der Kontaktelemente 143, 144, 145 wird ermöglicht, dass jeweils zwei Kontaktelemente, wie beispielsweise die Kodierungs-Kontaktelemente 144, 145 in der Ebene a hintereinander in Kontaktierungsrichtung y versetzt angeordnet werden können, so dass für zwei Kontaktelemente 144, 145 hinsichtlich der Breite B und der Länge L genauso viel Platz benötigt wird, wie für das benachbarte Spannungs-Kontaktelement 142. Sowohl aufgrund der unterschiedlichen Höhen H als auch durch die jeweiligen Aussparungen 160 der versetzt bzw. hintereinander angeordneten Kontaktelemente 143, 144, 145 kann gewährleistet werden, dass ein Gegenkontaktelement 340 an der Handwerkzeugmaschine 300 und/oder ein Gegenkontaktelement 740 am Ladegerät 700 das auf der zweiten Kontaktierungsebene c, also weiter hinten liegende zweite Kontaktelement 145 durch die Aussparung 160 des auf der ersten Kontaktierungsebene b, also weiter vorne liegenden ersten Kontaktelementen 144 hindurch kontaktiert, ohne dabei das vorne liegende erste Kontaktelement 144 zu kontaktieren. Ebenso kann auf diese Weise das vorne liegende erste Kontaktelement 144 kontaktiert werden, ohne dabei einen Kontakt mit dem hinten liegenden zweiten Kontaktelement 145 herzustellen. Auf diese Weise ist es möglich, dass entsprechend ausgebildete Gegenkontaktelemente 340 der Handwerkzeugmaschine 300 das weiter vorne liegende erste Kontaktelement 144 und/oder das weiter hinten liegende zweite Kontaktelement 145 kontaktieren, während ein entsprechend ausgebildetes Gegenkontaktelement 745 des Ladegerätes 700 lediglich das erste Kontaktelement 144 kontaktiert.

Durch eine geeignete Auslegung der Kontaktelemente 140 der Schnittstelle 180 eines erfindungsgemäßen Akkupacks 100 ist dieses nicht nur mit Ladegeräten 700 und/ oder Handwerkzeugmaschinen 300 kompatibel, die eine neue angepasste Schnittstelle 780, 380 aufweisen, sondern auch mit Ladegeräten 700 und/oder Handwerkzeugmaschinen 300, die lediglich eine Schnittstelle 780, 380 für maximal vier Kontaktelemente 140 aufweisen, die allerdings in Kontaktierungsrichtung y nebeneinander angeordnet sind. Hierbei können, je nach geometrischer Ausgestaltung der Kontaktelemente 140, anstelle von vier Kontaktelementen 140 eine Mehrzahl von Kontaktelementen 140, wie beispielsweise zusätzliche Kodierungs-Kontaktelemente oder Daten-Kontaktelemente in der Schnittstelle 180 eines erfindungsgemäßen Akkupacks 100 mit aufgenommen werden.

Die Figur 4 zeigt ein als Handwerkzeugmaschine 300 ausgebildetes Elektrogerät. Gemäß der dargestellten Ausführungsform ist die Handwerkzeugmaschine 300 zur netzunabhängigen Stromversorgung mechanisch und elektrisch mit dem in Figur 1 dargestellten Akkupack 100 verbindbar. Die Handwerkzeugmaschine 300 ist beispielhaft als Akku-Bohrschrauber ausgebildet. Es wird jedoch darauf hingewiesen, dass die vorliegende Erfindung nicht auf Akku-Bohrschrauber beschränkt ist, sondern vielmehr bei unterschiedlichen Handwerkzeugmaschinen 300 Anwendung finden kann, welche mit einem Akkupack 100 betrieben werden. Die Handwerkzeugmaschine 300 weist einen Grundkörper 305 auf, an welchem eine Werkzeugaufnahme 320 befestigt ist, und einen Handgriff 315, an welchem der erfindungsgemäße Akkupack 100 verriegelt angeordnet werden kann. Zum Verriegeln des Akkupacks 100 an dem Handgriff 315 wird der Akkupack 100 in einer Kontaktierungsrichtung y entlang des Handgriffs 315 geschoben, und zwar entlang einer unteren, im Wesentlichen senkrecht zur Längsrichtung des Handgriffs 315 ausgerichteten Außenfläche 316 des Handgriffs 315. Die Verriegelungsmittel umfassen unter anderem nicht im Detail dargestellte Verriegelungselemente und ein Betätigungselement 220. Durch Betätigung des Betätigungselementes 220 kann der Akkupack 100 von dem Handgriff 315 der Handwerkzeugmaschine 300 gelöst werden. Nach Entriegelung des Akkupacks 100 kann dieser vom Handgriff 315 getrennt werden, und zwar durch Schieben des Akkupacks 100 entgegen der Kontaktierungsrichtung y entlang einer unteren Fläche 316 des Handgriffs 315.

Die zu den Kontaktelementen 140 des Akkupacks 100 korrespondierenden Gegenkontaktelemente 340 der Handwerkzeugmaschine 300 weisen ein Minus-Gegenkontaktelement 341 und ein Plus-Gegenkontaktelement 342 für die Spannungsversorgung sowie zwei weitere Gegenkontaktelementen 343 und 344 für die Kodierung und Temperatur auf. Alle Gegenkontaktelemente 340 sind in der Form einer Kontaktzunge ausgeführt, so dass diese im Kontaktspalt 170 der jeweils komplementären Kontaktelemente 140 des Akkupacks 100 einklemmbar sind. Dabei ist in der in Figur 4 dargestellten Ausführungsvariante deutlich zu erkennen, dass die zwischen den Gegenkontaktelementen 341, 342 liegenden Gegenkontaktelemente 343, 344 zwar die gleiche Länge aufweisen wie die beiden Gegenkontaktelemente 341, 342, aber eine deutlich geringere Höhe H haben, wodurch einerseits der Einschubwiderstand für einen einzusetzenden Akkupack 100 deutlich reduziert wird, und gleichzeitig gewährleistet wird, dass diese beiden Gegenkontaktelemente 343, 344 nur mit den auf der ersten Kontaktierungsebene b angeordneten hohen Kontaktelementen 143, 144 des Akkupacks 100 in Kontakt treten können, nicht jedoch mit den auf der zweiten Kontaktierungsebene c angeordneten niedrigeren Kontaktelementen 145.

Das in Figur 5 gezeigte Ladegerät 700 kann mit einem Kabel 250 am Netzstrom angeschlossen werden und ist über die Schnittstelle 780 mechanisch und elektrisch mit dem in Figur 1 dargestellten Akkupack 100 verbindbar. Das Ladegerät 700 weist einen Grundkörper 230 auf, an welchem der erfindungsgemäße Akkupack 100 angeordnet werden kann, wobei der Akkupack 100 in einer Kontaktierungsrichtung y entlang des Gehäuses 230 geschoben wird. Nach einer erfolgten Aufladung des Akkupacks 100 kann dieses vom Ladegerät 700 wieder getrennt werden, und zwar durch ein Schieben des Akkupacks 100 entgegen der Kontaktierungsrichtung y.

Wie die Gegenkontaktelemente 340 der Handwerkzeugmaschine 300 weisen auch die zu den Gegenkontaktelemente 740 des Ladegerätes 700 zu den Kontaktelementen 140 des Akkupacks 100 korrespondierenden ein Plus-Gegenkontaktelement 741 und ein Minus-Gegenkontaktelement 742 für die Spannungsversorgung sowie zwei weitere Gegenkontaktelemente 743 und 745 für die Kodierung und Temperatur auf. Alle Gegenkontaktelemente 740 sind in der Form einer Kontaktzunge ausgeführt, so dass diese im Kontaktspalt 170 der jeweils komplementären Kontaktelemente 140 des Akkupacks 100 einklemmbar sind. Wie in der in Figur 5 dargestellten Ausführungsvariante deutlich zu erkennen ist, weist das zwischen den Gegenkontaktelementen 741, 742 liegende Gegenkontaktelement 743 sowohl die gleiche Länge L als auch die gleich Höhe H wie die beiden Gegenkontaktelemente 741, 742 auf. Allerdings ist in diesem Falle der untere Teilbereich des Gegenkontaktelementes 743 aus einem nichtleitenden Material ausgeführt, so dass eine Kontaktierung mit einem auf der zweiten Kontaktierungsebene c weiter hinten liegenden, niedrig ausgeführten Kontaktelement nicht möglich ist. Dahingegen kann durch den oberen Teilbereich des Gegenkontaktelementes 743 ein Kontakt mit dem Kontaktelement 145 hergestellt werden.

Eine alternative Ausführungsform für eine Ausgestaltung eines Gegenkontaktelementes 740 weist das Gegenkontaktelement 745 auf, welches im Gegensatz zu den anderen Gegenkontaktelementen 740 kürzer ausgeführt ist, dafür aber die gleiche Höhe H wie die anderen Gegenkontaktelemente 741, 742, 743 aufweist. Somit kann auch dieses Gegenkontaktelement 745 nur mit einem auf der ersten Kontaktierungsebene b angeordneten hohen Kontaktelement 143, 144 des Akkupacks 100 in Kontakt treten, und nicht mit einem der auf der zweiten Kontaktierungsebene c angeordneten Kontaktelement 145.

Grundsätzlich kann die Ausgestaltung der Gegenkontaktelemente 340 der Schnittstelle 380 der Handwerkzeugmaschine 300 sowie die Ausgestaltung der Gegenkontaktelemente 740 der Schnittstelle 780 des Ladegerätes 700 an die jeweilige Ausführungsform des zugehörigen Akkupacks 100 angepasst werden, allerdings ist es durch die erfindungsgemäße Anordnung der Kontaktelemente 140 auf unterschiedlichen Ebenen b, c auch möglich, dass ein erfindungsgemäßer Akkupack 100 mit einer Reihe bereits auf dem Markt befindlicher Schnittstellen 380, 780 an Handwerkzeugmaschinen 300 und/oder Ladegeräten 700 kompatibel ist.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Akkupack (100) für eine Handwerkzeugmaschine (300), aufweisend eine Schnittstelle (180) zum Herstellen einer mechanischen und elektrischen Verbindung des Akkupacks (100) mit einer Handwerkzeugmaschine (300) und/oder einem Ladegerät (700), wobei die Schnittstelle (180) Führungsmittel (110) zum Ansetzen des Akkupacks (100) an die Handwerkzeugmaschine (300) und/oder das Ladegerät entlang einer Kontaktierungsrichtung (y) sowie zumindest vier orthogonal zur Kontaktierungsrichtung (y) angeordnete Kontaktelemente (140, 141-145) zur elektrischen und/oder mechanischen Kontaktierung korrespondierender Gegenkontaktelemente (340, 341-344) an der Handwerkzeugmaschine (300) und/oder korrespondierender Gegenkontaktelemente (740, 741-745) an dem Ladegerät (700) aufweist, wobei die Kontaktelemente (140, 141-145) als Kontakttulpen mit jeweils einem Kontaktspalt (170) ausgestaltet sind, und mindestens zwei Kontaktelemente (144, 145) in Richtung der Kontaktierungsrichtung (y) versetzt zueinander angeordnet sind, **dadurch gekennzeichnet, dass** die mindestens zwei Kontaktelemente (144, 145) jeweils eine unterschiedliche Höhe (H) aufweisen und dass zumindest ein in Kontaktierungsrichtung (y) weiter vorne liegendes, erstes Kontaktelement (144) der zumindest zwei Kontaktelemente (144, 145) eine Aussparung (160) unterhalb des Kontaktspalts (170) aufweist.

2. Akkupack (100) nach Anspruch 1, **dadurch gekennzeichnet, dass** durch die Aussparung (160) des ersten Kontaktelements (144) hindurch das zumindest zweite Kontaktelement (145) durch ein Gegenkontaktelement (340) an der Handwerkzeugmaschine (300) und/oder ein Gegenkontaktelement (740) am Ladegerät (700) kontaktierbar ist.

3. Akkupack (100) nach Anspruch 1 oder 2, **dadurch gekennzeichnet, dass** eine Ebene (a), die durch den Kontaktspalt (170) des ersten Kontaktelementes (144) und die Kontaktierungsrichtung (y) aufgespannt wird, auch durch den Kontaktspalt (170) des zweiten Kontaktelementes (145) verläuft.

4. Akkupack (100) nach Anspruch 3, **dadurch gekennzeichnet, dass** eine Projektion des Kontaktspalts (170) des zumindest einen zweiten Kontaktelementes (145) entlang der Kontaktierungsrichtung (y) auf das zumindest eine erste Kontaktelement (144) im Bereich der Aussparung (160) des zumindest einen ersten Kontaktelementes (144) liegt.

5. Akkupack (100) nach einem der Ansprüche, **dadurch gekennzeichnet, dass** das zumindest eine erste Kontaktelement (144) in einer ersten Kontaktierungsebene (b) und das zumindest eine zweite Kontaktelement (145) in einer zweiten Kontaktierungsebene (c) liegt.

6. Akkupack (100) nach Anspruch 5, **dadurch gekennzeichnet, dass** die Schnittstelle (180) fünf Kontaktelemente (140, 141-145) aufweist, wobei auf einer der beiden Kontaktierungsebenen (b, c) ein Plus-Kontaktelement (141), ein Minus-Kontaktelement (142), ein Temperatur-Kontaktelement (143) sowie ein erstes Kontaktelement (144) angeordnet sind und auf der andere Kontaktierungsebene (c, b) ein zweites Kodierungs-Kontaktelement (145).

7. Akkupack (100) nach einem der Ansprüche 5 oder 6, **dadurch gekennzeichnet, dass** ein weiteres Kontaktelement (140, 141-145) auf der zweiten Kontaktierungsebene (c) angeordnet ist.

8. Akkupack (100) nach einem der Ansprüche, **dadurch gekennzeichnet, dass** wenigstens eines der Kontaktelemente (140, 141-145) ein Datenkontaktelement ist.

9. Handwerkzeugmaschine (300) umfassend einen Akkupack (100) nach einem der vorangehenden Ansprüche, sowie eine Schnittstelle (380) mit Gegenkontaktelementen (340, 341-344) zur elektrischen und/oder mechanischen Kontaktierung der Kontaktelemente (140, 141-145) des Akkupacks (100), **dadurch gekennzeichnet, dass** mindestens zwei Gegenkontaktelemente (343, 344) derart unterschiedliche Längen L und/oder Höhen H aufweisen, dass sie dazu geeignet sind, mindestens eines der zwei in Richtung der Kontaktierungsrichtung (y) versetzt zueinander angeordneten Kontaktelemente (144, 145) zu kontaktieren.

10. Ladegerät (700) zur Aufladung eines Akkupacks (100) nach einem der vorangehenden Ansprüche, umfassend eine Schnittstelle (780) mit Gegenkontaktelementen (740, 741-745) zur elektrischen und/oder mechanischen Kontaktierung der Kontaktelemente (140, 141-145) des Akkupacks (100), **dadurch gekennzeichnet, dass** mindestens zwei Gegenkontaktelemente (743, 745) derart unterschiedliche Längen L und/oder Höhen H aufweisen, dass sie dazu geeignet sind, mindestens eines der zwei in Richtung der Kontaktierungsrichtung (y) versetzt zueinander angeordneten Kontaktelemente (144, 145) zu kontaktieren.

## Claims

1. Rechargeable battery pack (100) for a handheld power tool (300), having an interface (180) for establishing a mechanical and electrical connection of the rechargeable battery pack (100) to a handheld power tool (300) and/or a charging device (700), wherein the interface (180) has guide means (110) for fitting the rechargeable battery pack (100) to the handheld power tool (300) and/or the charging device along a contact-making direction (y) and also has at least four contact elements (140, 141-145), which are arranged orthogonally to the contact-making direction (y), for making electrical and/or mechanical contact with corresponding mating contact elements (340, 341-344) on the handheld power tool (300) and/or corresponding mating contact elements (740, 741-745) on the charging device (700), wherein the contact elements (140, 141-145) are designed as contact tulips with a contact gap (170) in each case, and at least two contact elements (144, 145) are arranged offset in relation to one another in the direction of the contact-making direction (y), **characterized in that** the at least two contact elements (144, 145) each have a different height (H), and **in that** at least one first contact element (144) of the at least two contact elements (144, 145), which first contact element is situated further towards the front in the contact-making direction (y), has a cutout (160) beneath the contact gap (170).

2. Rechargeable battery pack (100) according to Claim 1, **characterized in that** contact can be made with the at least second contact element (145) by a mating contact element (340) on the handheld power tool (300) and/or a mating contact element (740) on the charging device (700) through the cutout (160) of the first contact element (144).

3. Rechargeable battery pack (100) according to Claim 1 or 2, **characterized in that** a plane (a) which is spanned by the contact gap (170) of the first contact element (144) and the contact-making direction (y) also runs through the contact gap (170) of the second contact element (145).

4. Rechargeable battery pack (100) according to Claim 3, **characterized in that** a projection of the contact gap (170) of the at least one second contact element (145) along the contact-making direction (y) lies on the at least one first contact element (144) in the region of the cutout (160) of the at least one first contact element (144).

5. Rechargeable battery pack (100) according to one of the claims, **characterized in that** the at least one first contact element (144) lies in a first contact-making plane (b), and the at least one second contact element (145) lies in a second contact-making plane (c) .

6. Rechargeable battery pack (100) according to Claim 5, **characterized in that** the interface (180) has five contact elements (140, 141-145), wherein a positive contact element (141), a negative contact element (142), a temperature contact element (143) and also a first contact element (144) are arranged on one of the two contact-making planes (b, c), and a second coding contact element (145) is arranged on the other contact-making plane (c, b).

7. Rechargeable battery pack (100) according to either of Claims 5 and 6, **characterized in that** a further contact element (140, 141-145) is arranged on the second contact-making plane (c).

8. Rechargeable battery pack (100) according to one of the claims, **characterized in that** at least one of the contact elements (140, 141-145) is a data contact element.

9. Handheld power tool (300) comprising a rechargeable battery pack (100) according to one of the preceding claims and also an interface (380) with mating contact elements (340, 341-344) for making electrical and/or mechanical contact with the contact elements (140, 141-145) of the rechargeable battery pack (100), **characterized in that** at least two mating contact elements (343, 344) have different lengths L and/or heights H in such a way that they are suitable for making contact with at least one of the two contact elements (144, 145) which are arranged offset in relation to one another in the direction of the contact-making direction (y).

10. Charging device (700) for charging a rechargeable battery pack (100) according to one of the preceding claims, comprising an interface (780) with mating contact elements (740, 741-745) for making electrical and/or mechanical contact with the contact elements (140, 141-145) of the rechargeable battery pack (100), **characterized in that** at least two mating contact elements (743, 745) have different, lengths L and/or heights H in such a way that they are suitable for making contact with at least one of the two contact elements (144, 145) which are arranged offset in relation to one another in the direction of the contact-making direction (y).

## Revendications

1. Bloc de batterie (100) destiné à une machine-outil portative (300), comportant une interface (180) permettant l'établissement d'une liaison mécanique et électrique du bloc de batterie (100) avec une machine-outil portative (300) et/ou avec un appareil de charge (700), dans lequel l'interface (180) comporte des moyens de guidage (110) destinés à l'installation du bloc de batterie (100) sur la machine-outil portative (300) et/ou sur l'appareil de charge le long d'une direction de mise en contact (y) ainsi qu'au moins quatre éléments de contact (140, 141-145) disposés perpendiculairement à la direction de mise en contact (y) pour la mise en contact électrique et/ou mécanique d'éléments de contact antagonistes correspondants (340, 341-344) sur la machine-outil portative (300) et/ou d'éléments de contact antagonistes correspondants (740, 741-745) sur l'appareil de charge (700), dans lequel les éléments de contact (140, 141-145) sont réalisés sous la forme de tulipes de contact ayant respectivement une fente de contact (170), et dans lequel au moins deux éléments de contact (144, 145) sont disposés de manière décalée l'un par rapport à l'autre dans la direction de mise en contact (y), **caractérisé en ce que** les au moins deux éléments de contact (144, 145) présentent respectivement des hauteurs différentes (H) et **en ce qu'**au moins un premier élément de contact (144) se situant plus en avant dans la direction de mise en contact (y), des au moins deux éléments de contact (144, 145), comporte un évidement (160) situé en-dessous de la fente de contact (170).

2. Bloc de batterie (100) selon la revendication 1, **caractérisé en ce que** l'au moins un deuxième élément de contact (145) peut être mis en contact à travers l'évidement (160) du premier élément de contact (144) par l'intermédiaire d'un élément de contact antagoniste (340) avec la machine-outil portative (300) et/ou par l'intermédiaire d'un élément de contact antagoniste (740) avec l'appareil de charge (700).

3. Bloc de batterie (100) selon la revendication 1 ou 2, **caractérisé en ce qu'**un plan (a) qui est sous-tendu par la fente de contact (170) du premier élément de contact (144) et par la direction de mise en contact (y), s'étend également à travers la fente de contact (170) du deuxième élément de contact (145).

4. Bloc de batterie (100) selon la revendication 3, **caractérisé en ce qu'**une projection de la fente de contact (170) de l'au moins un deuxième élément de contact (145) se situe le long de la direction de mise en contact (y) sur l'au moins un premier élément de contact (144) dans la région de l'évidement (160) de l'au moins un premier élément de contact (144).

5. Bloc de batterie (100) selon l'une des revendications, **caractérisé en ce que** l'au moins un premier élément de contact (144) se situe dans un premier plan de mise en contact (b) et **en ce que** l'au moins un deuxième élément de contact (145) se situe dans un deuxième plan de mise en contact (c).

6. Bloc de batterie (100) selon la revendication 5, **caractérisé en ce que** l'interface (180) comporte cinq éléments de contact (140, 141-145), dans lequel un élément de contact positif (141), un élément de contact négatif (142), un élément de contact de température (143) ainsi qu'un premier élément de contact (144) sont disposés sur l'un des deux plans de mise en contact (b, c) et dans lequel un deuxième élément de contact de codage (145) est disposé sur l'autre plan de mise en contact (c, b).

7. Bloc de batterie (100) selon l'une quelconque des revendications 5 ou 6, **caractérisé en ce qu'**un autre élément de contact (140, 141-145) est disposé sur le deuxième plan de mise en contact (c).

8. Bloc de batterie (100) selon l'une des revendications précédentes, **caractérisé en ce qu'**au moins l'un des éléments de contact (140, 141-145) est un élément de contact de données.

9. Machine-outil portative (300) comprenant un bloc de batterie (100) selon l'une quelconque des revendications précédentes, ainsi qu'une interface (380) comportant des éléments de contact antagonistes (340, 341-344) pour la mise en contact électrique et/ou mécanique des éléments de contact (140, 141-145) du bloc de batterie (100), **caractérisée en ce qu'**au moins deux éléments de contact antagonistes (343, 344) présentent des longueurs L et/ou des hauteurs H différentes de manière à ce qu'ils soient appropriés pour mettre en contact au moins l'un des deux élément de contact (144, 145) disposés de manière décalée l'un par rapport à l'autre dans la direction de mise en contact (y).

10. Appareil de charge (700) destiné à charger un bloc de batterie (100) selon l'une quelconque des revendications précédentes, comprenant une interface (780) comportant des éléments de contact antagonistes (740, 741-745) pour la mise en contact électrique et/ou mécanique des éléments de contact (140, 141-145) du bloc de batterie (100), **caractérisé en ce qu'**au moins deux éléments de contact antagonistes (743, 745) présentent des longueurs L et/ou des hauteurs H différentes de manière à ce qu'ils soient appropriés pour mettre en contact au moins l'un des deux éléments de contact (144, 145) disposés de manière décalée l'un par rapport à l'autre dans la direction de mise en contact (y).
